# EUROPÄISCHE PATENTSCHRIFT

(11) **EP 3 129 646 B1**
(45) Veröffentlichungstag und Bekanntmachung des Hinweises auf die Patenterteilung: **20.12.2017**
(21) Anmeldenummer: 15730948.5
(22) Anmeldetag: 26.03.2015
(51) Int. Cl.: F03D 1/06

(54) **BLATTANSCHLUSS FÜR ROTORBLÄTTER**
BLADE CONNECTION FOR ROTOR BLADES
RACCORD DE PALE DE ROTOR

(30) Priorität: 07.04.2014 DE 102014005452
(43) Veröffentlichungstag der Anmeldung: 15.02.2017
(73) Patentinhaber: Windnovation Engineering Solutions GmbH, 10243 Berlin (DE)
(72) Erfinder: SEEWALD, Frank, 13187 Berlin (DE)
(74) Vertreter: Kietzmann, Manfred
(86) Internationale Anmeldenummer: PCT/DE2015/000160
(87) Internationale Veröffentlichungsnummer: WO 2015/154737

(56) Entgegenhaltungen:
- DE-C5-102006 022 272
- KR-A- 20130 023 496

## Beschreibung

Die Erfindung betrifft einen Blattanschluss für Rotorblätter, insbesondere von Windkraftanlagen, unter Nutzung einer T-Bolzen-Verbindung.

Die bei einer T-Bolzen-Verbindung verwendeten Querbolzen müssen im deutlich weicheren Laminat des Rotorblattes und insbesondere im Laminat der Blattwurzel verspannt werden. Bei den immer höheren Belastungen ist besonders die Biegebelastung der Querbolzen kritisch, da diese Belastung auf einfache Weise nur durch eine Durchmesservergrößerung verringert werden kann, was aber zwingend eine Verringerung des Laminats zwischen den einzelnen Querbolzen zur Folge hat und das Laminat damit schwächt.

Zur Lösung dieses Problems werden in der DE 10 2006 022 272 C5 zwei Lösungen vorgeschlagen: Zum einen soll eine höhere Biegefestigkeit des Querbolzens dadurch erreicht werden, dass der Querbolzen, der mit einem Längsbolzen zur T-Verbindung verschraubt wird, in Richtung der Längsachse eine größere Ausdehnung als quer zur Richtung der Längsachse aufweisen. Im Einzelnen werden elliptische, ovale, teilweise elliptische, teilweise ovale und knochenförmige Querbolzen benannt. Zum anderen wird vorgeschlagen, die Querbolzen im wenigstens zwei Reihen in der Wandung der Blattwurzel anzuordnen, wobei wenigstens eine erste Reihe näher an dem blattwurzelseitigen Ende des Rotorblattes angeordnet ist als wenigstens eine zweite Reihe.

Diese Lösungen sind mit einem erhöhten fertigungstechnischen Aufwand für die Querbolzen selbst als auch für deren Integration in die Rotorblattstruktur verbunden.

Weitere T-Bolzen-Verbindungen sind aus der DE 20 2011 101 634 U1 und der WO 2012/155881 A2 bekannt. Hier kommen zylinderförmige Querbolzen zum Einsatz.

Aus der WO 01/42647 A2 ist auch ein Querbolzen bekannt, der eine halbzylindrische Form aufweist.

Aufgabe der Erfindung ist es, einen Blattanschluss unter Verwendung des T-Bolzen-Prinzips vorzuschlagen, der sich durch hohe Biegefestigkeit auszeichnet und festigungstechnisch einfach ist.

Gelöst wird diese Aufgabe mit den Merkmalen des Anspruches 1, vorteilhafte Ausgestaltungen sind Gegenstand der Unteransprüche.

Erfindungsgemäß wird für einen Blattanschluss für Rotorblätter mit T-Bolzen-Verbindungen zwischen dem Rotorblatt und einem Anschlussteil, wobei bei den T-Bolzen-Verbindungen ein Querbolzen im Rotorblatt mittels mindestens einer Dehnschraube mit dem Anschlussteil verbunden ist, vorgeschlagen, dass parallel zur Achse des Querbolzens und zwischen dem Querbolzen und dem Anschlussteil mindestens ein weiterer Körper im Rotorblatt angeordnet ist, dessen Mantel mindestens einen zylinderförmigen Abschnitt aufweist, der sich parallel zur Mantelfläche des Querbolzens erstreckt, und die mindestens eine Dehnschraube den oder diese Körper durchdringt, vorzugsweise in einer Durchgangsbohrung.

Die Dehnschraube kann mit dem jeweiligen Querbolzen verschraubt oder anderweitig in diesem befestigt sein.

In Bezug auf die Anordnung der Querbolzen und Körper können in alternativen Ausführungen vorgesehen sein,
dass der Querbolzen und der mindestens eine Körper einen Abstand zueinander aufweisen oder
dass der Querbolzen und der mindestens eine Körper eine gemeinsame Berührungslinie oder gemeinsame Kontaktflächen besitzen.

Bei einer weiteren Ausführung ist vorgesehen, dass
die Körper untereinander einen Abstand und/oder benachbarte Körper eine gemeinsame Berührungslinie und/oder gemeinsame Kontaktflächen aufweisen.

Die Kontaktflächen stehen bei beiden Ausführungen zur Dehnschraubenlängsrichtung in einem rechten Winkel ± 30°.

Um einen optimalen Kraftfluss zwischen dem Körper und dem Laminat des Rotorblattes zu gewährleisten, sieht eine vorteilhafte Ausgestaltung vor, dass der zylinderförmige Abschnitt der Mantelfläche des dem Anschlussteil nächstliegenden Körpers in Richtung Anschlussteil weist.

Dabei hat es sich als vorteilhaft erwiesen, wenn der Durchmesser (D) des zylindrischen Abschnittes der Mantelfläche der Körper in dessen fiktiver Fortführung durch keinen anderen Mantelabschnitt des jeweiligen Körpers überragt wird.

Die Kontaktflächen sind bei einer Ausführung plane Flächen. Um Querverschiebungen, d.h. in Richtung der Achse der Querbolzen, zu vermeiden, sieht eine weitere vorteilhafte Ausgestaltung vor, dass die Kontaktflächen eine strukturierte Oberfläche aufweisen oder mit Formschluss zur benachbarten Kontaktfläche herstellenden Formen und/oder einer Form versehen sind. Strukturierte Oberfläche im hier gebrauchten Sinn schließt Beschichtungen ein.

Hinsichtlich der Größe der Kontaktflächen benachbarter Körper oder des mindestens einen Körpers mit dem Querbolzen können gleiche oder unterschiedliche plane Abmaße vorgesehen sein.

Mit dem vorgeschlagenen Blattanschluss kann die bei Rotorblattfertigern vorhandene Anlagentechnik zur T-Bolzen-Verbohrung praktisch unverändert weiter genutzt werden. Die Querbolzen behalten ihre zylindrische Form und werden lediglich bei vorhandenen Kontaktflächen spanend oder durch einen Umformprozess angeflacht und ggf. strukturiert. Das gleiche gilt für zylinderförmige Körper.

Mit dem Blattanschluss sind weiter höhere Festigkeiten ohne Laminatreduzierungen im Querschnitt zu erreichen. Durch die gegenseitige Stützwirkung der Körper und des mindestens einen Körpers mit dem Querbolzen wird das Widerstandsmoment des jeweiligen Querbolzens gegen Biegung signifikant erhöht.

Ein weiterer Vorteil besteht darin, dass durch eine geringere Breite der Querbolzen eine größere Anzahl von T-Bolzen-Verbindungen auf z. B. einem Lochkreisdurchmesser des Anschlussteils realisierbar sind, was das maximal übertragbare z.B. Blattwurzelbiegemoment für den gegebenen Lochkreisdurchmesser erhöht.

Die Erfindung soll anhand der Zeichnungen erläutert werden. Es zeigen:
- Fig. 1: Querbolzen mit beabstandetem Körper,
- Fig. 2: Querbolzen mit planer Kontaktfläche zum Körper,
- Fig. 3: Querbolzen mit zwei Körpern und
- Fig. 4: Beispiele der Körper.

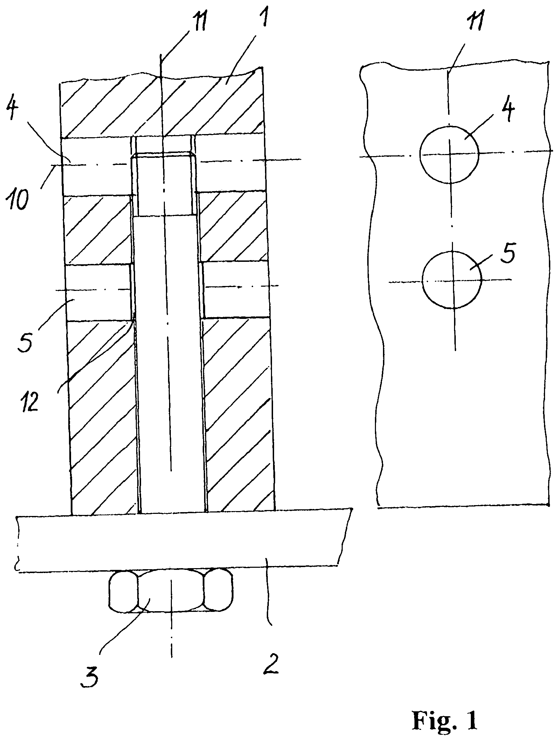

**Fig. 1** zeigt einen Blattanschluss für ein Rotorblatt 1 an einem Anschlussteil 2 mittels einer T-Bolzen-Verbindung, bei der ein Querbolzen 4 im Rotorblatt 1 mit einer Dehnschraube 3 mit dem Anschlussteil 2 verbunden ist.

Parallel zur Achse 10 des Querbolzens 4 und zwischen dem Querbolzen 4 und dem Anschlussteil 2 ist beabstandet zum Querbolzen 4 ein weiterer Körper 5 im Rotorblatt 1 angeordnet, dessen Mantel hier nicht nur einen zylinderförmigen Abschnitt aufweist, sondern zylinderförmig ist.

Die Dehnschraube 3 durchdringt den Körper 5 in einer Durchgangsbohrung 12. Die Dehnschraube 3 ist mit dem Querbolzen 4 verschraubt.

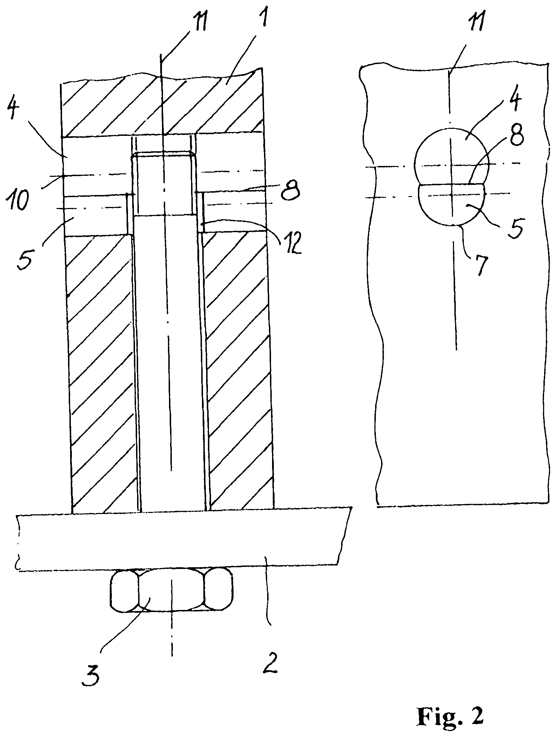

In der **Fig. 2** wird eine Ausführung gezeigt, bei der der Querbolzen 4 und der Körper 5 eine gemeinsame plane Kontaktflächen 8 aufweisen.

Auch in dieser Ausführung wird durch die gegenseitige Stützwirkung des Körpers 5 und des Querbolzens 4 das Widerstandsmoment des Querbolzens 4 gegen Biegung erhöht.

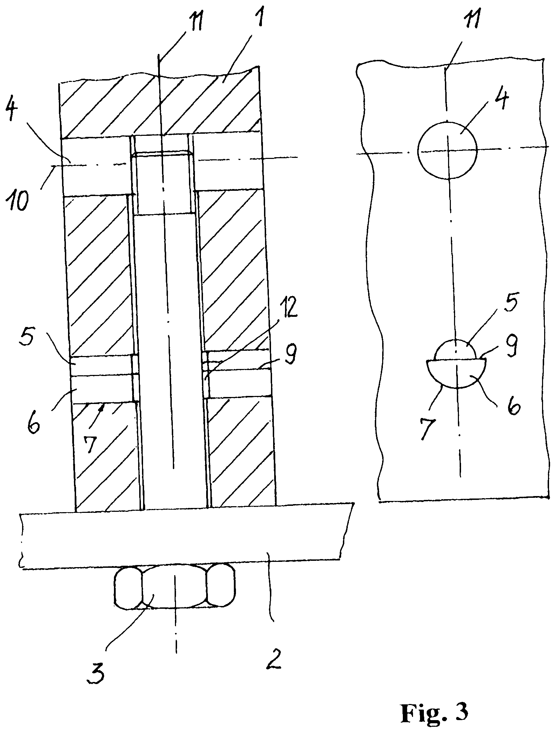

**Fig. 3** zeigt ein Ausführungsbeispiel, bei dem zwischen dem Querbolzen 4 und dem Anschlussteil 2 zwei Körper 5, 6 mit einer gemeinsamen Kontaktfläche 9 angeordnet sind.

Der zylinderförmige Abschnitt 7 der Mantelfläche des Körpers 6 erstreckt sich parallel zur Mantelfläche des Querbolzens 4 und weist in Richtung des Anschlussteils 2.

Der Durchmesser des Körpers 5 wurde bei dieser Ausführung kleiner als der des Körpers 6 ausgeführt, und die Kontaktflächen weisen eine unterschiedliche plane Ausdehnung auf. Die Dehnschraube 3 durchdringt die Körper 5, 6 in der jeweiligen Durchgangsbohrung 12.

Dieses Ausführungsbeispiel verdeutlicht die vielfältigen Gestaltungsmöglichkeiten für die Körper 5, 6, um auf die Festigkeit und Biegesteifigkeit abgestimmte Lösungen für den Blattanschluss zu gelangen, ohne dass vom bewährten T-Bolzen-Prinzip abgewichen werden muss. Da die Körper 5, 6 zumindest teilzylindrisch ausgebildet sind (zylindrischer Abschnitt 7 der Mantelfläche) lassen sich die Aufnahmen für die Körper 5, 6 z. B. durch technologisch einfaches Bohren herstellen.

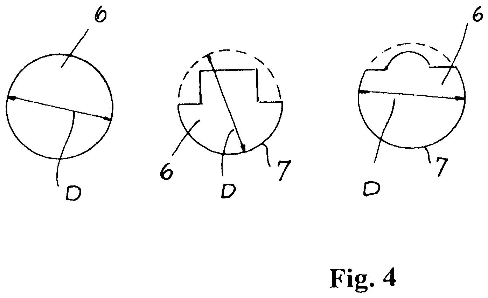

Dabei müssen die Körper 5, 6 nicht geteilte Körper sein, sondern können auch aus einem Stück bestehen, wie die Beispiele in **Fig. 4** zeigen.

Dabei sollte, weil es vorteilhaft für die Herstellungstechnologie für die Aufnahmen der Körper 6 ist, der Durchmesser (D) des zylindrischen Abschnittes 7 in seiner fiktiven Fortführung an keiner Stelle überschritten werden. In der **Fig. 4** ist die fiktive Fortführung durch eine gestrichelte Linie dargestellt.

In den **Fig. 1 - 3** sind die Körper 5, 6 und die Querbolzen 4 jeweils als durchgehend durch das Rotorblatt 1 dargestellt. Möglich ist es natürlich auch, diese kürzer auszuführen und in einem Sackloch anzuordnen.

### Bezugszeichenliste

- 1: Rotorblatt
- 2: Anschlussteil
- 3: Dehnschraube
- 4: Querbolzen
- 5: Körper
- 6: Körper
- 7: zylinderförmiger Abschnitt der Mantelfläche
- 8: Kontaktflächen zwischen Querbolzen und Körper
- 9: Kontaktflächen zwischen Körper und Körper
- 10: Querbolzenachse
- 11: Oehnschraubenlängsrichtung
- 12: Durchgangsbohrung
- D: Durchmesser des zylinderförmigen Abschnittes der Mantelfläche

## Patentansprüche

1. Blattanschluss für Rotorblätter mit
T-Bolzen-Verbindungen zwischen dem Rotorblatt (1) und einem Anschlussteil (2), wobei bei den T-Bolzen-Verbindungen ein Querbolzen (4) im Rotorblatt (1) mittels mindestens einer Dehnschraube (3) mit dem Anschlussteil (2) verbunden ist, **dadurch gekennzeichnet, dass**
parallel zur Achse (10) des Querbolzens und zwischen dem Querbolzen (4) und dem Anschlussteil (2) mindestens ein weiterer Körper (5, 6) im Rotorblatt (1) angeordnet ist, dessen Mantel mindestens einen zylinderförmigen Abschnitt (7) aufweist, der sich parallel zur Mantelfläche des Querbolzens (4) erstreckt, und die mindestens eine Dehnschraube (3) den oder diese Körper (5, 6) durchdringt.

2. Blattanschluss nach Anspruch 1, **dadurch gekennzeichnet, dass**
der Querbolzen (4) und der mindestens eine Körper (5, 6) einen Abstand zueinander aufweisen.

3. Blattanschluss nach Anspruch 1, **dadurch gekennzeichnet, dass**
der Querbolzen (4) und der mindestens eine Körper (5, 6) eine gemeinsame Berührungslinie oder gemeinsame plane Kontaktflächen (8) aufweisen.

4. Blattanschluss nach einem der Ansprüche 1 bis 3, **dadurch gekennzeichnet, dass**
die Körper (5, 6) untereinander einen Abstand und/oder benachbarte Körper (5, 6) eine gemeinsame Berührungslinie und/oder gemeinsame Kontaktflächen (9) aufweisen.

5. Blattanschluss nach einem der Ansprüche 1 bis 4, **dadurch gekennzeichnet, dass**
der zylinderförmige Abschnitt der Mantelfläche des dem Anschlussteil (2) nächstliegenden Körpers (6) in Richtung Anschlussteil (2) weist.

6. Blattanschluss nach einem der Ansprüche 3 bis 5, **dadurch gekennzeichnet, dass**
die Kontaktflächen (8, 9) mit der Dehnschraubenlängsrichtung (11) einen rechten Winkel ± 30° einschließen.

7. Blattanschluss nach einem der Ansprüche 3 bis 6, **dadurch gekennzeichnet, dass**
die Kontaktflächen (8, 9) plan sind oder eine strukturierte Oberfläche aufweisen oder mit Formschluss zur benachbarten Kontaktfläche herstellenden Formen und/oder einer Form versehen sind.

8. Blattanschluss nach Anspruch 7, **dadurch gekennzeichnet, dass**
der Formschluss zwischen dem Körper (5) und dem Querbolzen (4) und/oder der Körper (5, 6) untereinander in Längsrichtung des Querbolzens (4) besteht.

9. Blattanschluss nach einem der Ansprüche 3 bis 8, **dadurch gekennzeichnet, dass**
die Kontaktflächen (8, 9) benachbarter Körper oder des mindestens einen Körpers (5) mit dem Querbolzen (4) gleiche oder unterschiedliche plane Abmaße aufweisen.

10. Blattanschluss nach einem der Ansprüche 1 bis 9, **dadurch gekennzeichnet, dass**
der Durchmesser (D) des zylindrischen Abschnittes (7) der Mantelfläche der Körper (5, 6) in dessen fiktiver Fortführung durch keinen anderen Mantelabschnitt des jeweiligen Körpers (5, 6) überragt ist.

## Claims

1. A blade attachment for rotor blades having
T-bolt connections between the rotor blade (1) and an attachment part (2), wherein, in the T-bolt connections, a transverse bolt (4) in the rotor blade (1) is connected to the attachment part (2) by means of at least one expansion screw (3), **characterized in that**,
parallel to the axis (10) of the transverse bolt and between the transverse bolt (4) and the attachment part (2), at least one further body (5, 6) is arranged in the rotor blade (1), the lateral surface of which has at least one cylindrical portion (7) which extends parallel to the lateral surface of the transverse bolt (4), and the at least one expansion screw (3) penetrates through the body or these bodies (5, 6).

2. The blade attachment according to Claim 1, **characterized in that** the transverse bolt (4) and the at least one body (5, 6) have a mutual spacing.

3. The blade attachment according to Claim 1, **characterized in that** the transverse bolt (4) and the at least one body (5, 6) have a common line of contact or common planar contact surfaces (8).

4. The blade attachment according to any one of Claims 1 to 3, **characterized in that** the bodies (5, 6) have a mutual spacing and/or adjacent bodies (5, 6) have a common line of contact and/or common contact surfaces (9).

5. The blade attachment according to any one of Claims 1 to 4, **characterized in that** the cylindrical portion of the lateral surface of the body (6) closest to the attachment part (2) faces in the direction of the attachment part (2).

6. The blade attachment according to any one of Claims 3 to 5, **characterized in that** the contact surfaces (8, 9) enclose a right angle ± 30° with the longitudinal direction (11) of the expansion screw.

7. The blade attachment according to any one of Claims 3 to 6, **characterized in that** the contact surfaces (8, 9) are planar or have a structured surface or are given forms and/or a form which produce(s) a form fit with respect to the adjacent contact surface.

8. The blade attachment according to Claim 7, **characterized in that** the form fit between the body (5) and the transverse bolt (4) and/or between the bodies (5, 6) is in the longitudinal direction of the transverse bolt (4).

9. The blade attachment according to any one of Claims 3 to 8, **characterized in that** the contact surfaces (8, 9) of adjacent bodies or the at least one body (5) and the transverse bolt (4) have the same or different planar dimensions.

10. The blade attachment according to any one of Claims 1 to 9, **characterized in that** no other lateral-surface portion of the respective body (5, 6) projects beyond the diameter (D) of the cylindrical portion (7) of the lateral surface of the bodies (5, 6) in the imaginary continuation of the cylindrical portion (7).

## Revendications

1. Raccord de pale pour des pales de rotor avec
des liaisons par boulon à tête en T entre la pale de rotor (1) et une partie de raccordement (2), dans lequel, au niveau des liaisons par boulon à tête en T, un boulon transversal (4) dans la pale de rotor (1) est relié à la partie de raccordement (2) par l'intermédiaire d'au moins une vis d'expansion (3), **caractérisé en ce que**
parallèlement à l'axe (10) et entre le boulon transversal (4) et la partie de raccordement (2) est disposé au moins un corps supplémentaire (5, 6), dans la pale de rotor (1), dont l'enveloppe présente au moins une portion de forme cylindrique (7) qui s'étend parallèlement à la surface d'enveloppe du boulon transversal (4) et **en ce que** ladite au moins une vis d'expansion (3) traverse ce ou ces corps (5, 6).

2. Raccord de pale selon la revendication 1, **caractérisé en ce que**
le boulon transversal (4) et ledit au moins un corps (5, 6) présentent une distance l'un par à l'autre.

3. Raccord de pale selon la revendication 1, **caractérisé en ce que**
le boulon transversal (4) et ledit au moins un corps (5, 6) présentent une conduite en commun ou des surfaces de contact (8) planes en commun.

4. Raccord de pale selon l'une des revendications 1 à 3, **caractérisé en ce que**
les corps (5, 6) présentent entre eux une distance et/ou **en ce que** des corps (5, 6) adjacents présentent une conduite en commun et/ou des surfaces de contact (9) en commun.

5. Raccord de pale selon l'une des revendications 1 à 4, **caractérisé en ce que**
la portion de forme cylindrique de la surface extérieure du corps (6) le plus proche de la partie de raccordement (2) est disposée en direction de la partie de raccordement (2).

6. Raccord de pale selon l'une des revendications 3 à 5, **caractérisé en ce que**
les surfaces de contact (8, 9) forment un angle droit de ± 30° avec la direction longitudinale de la vis d'expansion (11).

7. Raccord de pale selon l'une des revendications 3 à 6, **caractérisé en ce que** les surfaces de contact (8, 9) sont planes ou présentent une surface structurée ou sont pourvues d'une fermeture de moule pour les moules adjacents établissant une surface de contact et/ou sont pourvues d'un moule.

8. Raccord de pale selon la revendication 7, **caractérisé en ce que**
la fermeture de moule entre le corps (5) et le boulon transversal (4) et/ou entre les corps (5, 6) est dans la direction longitudinale du boulon transversal (4).

9. Raccord de pale selon l'une des revendications 3 à 8, **caractérisé en ce que**
les surfaces de contact (8, 9) des corps adjacents ou dudit au moins un corps (5) ont des dimensions planes identiques ou différentes de celles du boulon transversal (4).

10. Raccord de pale selon l'une des revendications 1 à 9, **caractérisé en ce que**
le diamètre (D) de la portion cylindrique (7) de la surface extérieure des corps (5, 6), dans son prolongement imaginaire, n'est dépassé par aucune autre portion de l'enveloppe des corps respectifs (5, 6).
